# EUROPÄISCHE PATENTSCHRIFT

(11) **EP 2 910 798 B1**
(45) Veröffentlichungstag und Bekanntmachung des Hinweises auf die Patenterteilung: **26.10.2016**
(21) Anmeldenummer: 14000618.0
(22) Anmeldetag: 21.02.2014
(51) Int. Cl.: F15B 13/04, F16K 11/07

(54) **Mehrwegeventil**
Multi-port valve
Soupape multi-voies

(43) Veröffentlichungstag der Anmeldung: 26.08.2015
(73) Patentinhaber: FESTO AG & Co. KG, 73734 Esslingen (DE)
(72) Erfinder: Göller, Thomas, 70191 Stuttgart (DE)
(74) Vertreter: Patentanwälte Magenbauer & Kollegen Partnerschaft mbB

(56) Entgegenhaltungen:
- EP-A2- 0 198 234
- CH-A- 496 895
- DE-A1- 19 813 981
- DE-A1-102009 048 787
- DE-B- 1 272 658
- JP-A- H08 303 406

## Beschreibung

Die Erfindung betrifft ein Mehrwegeventil, mit einem Ventilgehäuse, das eine Ventilkammer definiert, in der ein unter Ausführung einer Hubbewegung axial bewegbarer Ventilschieber aufgenommen ist, und mit Antriebsmitteln zur gesteuerten Fluidbeaufschlagung des Ventilschiebers zwecks Hervorrufens der Hubbewegung, wobei die Ventilkammer an wenigstens einer Stirnseite durch einen Abschlussdeckel des Ventilgehäuses begrenzt ist, der unter Zwischenschaltung einer die Ventilkammer zur Umgebung hin abdichtenden Deckeldichtung axial an einen die Ventilkammer peripher umschließenden Gehäusekörper angesetzt ist, wobei die Deckeldichtung eine axial zwischen dem Abschlussdeckel und dem Gehäusekörper angeordnete Dichtungsstruktur aufweist und wobei in der Ventilkammer eine axial zwischen dem Ventilschieber und dem Abschlussdeckel wirkende nachgiebige Aufpralldämpfungsstruktur angeordnet ist, die ein im Hubweg des Ventilschiebers angeordneter integraler Bestandteil der Deckeldichtung ist.

Ein aus der DE 10 2004 042 224 A1 bekanntes Mehrwegeventil verfügt über einen Ventilschieber, der durch Fluidbeaufschlagung in einer Ventilkammer bewegbar ist, um in verschiedenen Schaltstellungen positioniert zu werden. Je nach Schaltstellung ergibt sich ein unterschiedliches Verbindungsmuster zwischen in die Ventilkammer einmündenden Ventilkänälen. Axial zwischen dem Ventilschieber und einem Abschlussdeckel des Ventilgehäuses ist eine Dichtungsscheibe angeordnet, die eine zur Endlagendämpfung des Ventilschiebers dienende nachgiebige Aufpralldämpfungsstruktur aufweist.

Aus der Produktinformation "Universalventil CPE", FESTO, Ausgabe 2013/07, Seiten 71/72, ist ein Magnetventil bekannt, dessen Ventilschieber stirnseitig unmittelbar mit einer hülsenförmigen Aufpralldämpfungsstruktur bestückt ist, mit der voraus der Ventilschieber auf eine Abschlusswand des Ventilgehäuses auftrifft, wenn der Ventilschieber in seine Endlage bewegt wird.

Durch die Aufpralldämpfung wird einer Beschädigung der Systemkomponenten des Mehrwegeventils vorgebeugt, bei gleichzeitiger Ermöglichung erhöhter Hubgeschwindigkeiten beim Umschalten des Ventilschiebers. Nachteilig ist allerdings der in Verbindung mit der Montage der Aufpralldämpfungsstruktur anfallende Zeitaufwand.

Aus der EP 0 198 234 A2 ist ein Mehrwegeventil der eingangs genannten Art bekannt, bei dem sich zwischen jedem Ventildeckel und der Stirnseite des sich anschließenden Gehäusekörpers eine Dichtungsringscheibe befindet, die gleichzeitig eine Schieberendlagendämpfung für den Ventilschieber des Mehrwegeventils bildet.

Der Erfindung liegt die Aufgabe zugrunde, Maßnahmen zu treffen, um die Herstellung und Montage eines mit einer Aufpralldämpfungsstruktur für den Ventilschieber ausgestatteten Mehrwegeventils zu vereinfachen und kostengünstiger zu gestalten.

Zur Lösung dieser Aufgabe ist in Verbindung mit den eingangs genannten Merkmalen vorgesehen, dass die Aufpralldämpfungsstruktur mit radialem Abstand zu der Dichtungsstruktur angeordnet und mittels mindestens eines Haltearmes an der Dichtungsstruktur befestigt ist.

Das Mehrwegeventil hat ein Ventilgehäuse, das eine Ventilkammer definiert, die peripher von einem Gehäusekörper und an wenigstens einer Stirnseite von einem bezüglich des Gehäusekörpers separaten Abschlussdeckel begrenzt ist. Der Abschlussdeckel ist an dem Gehäusekörper befestigt, wobei eine axial dazwischen angeordnete Deckeldichtung für eine fluiddichte Abdichtung der Ventilkammer bezüglich der Atmosphäre sorgt. Erfindungsgemäß ist die zur Aufpralldämpfung beim Erreichen einer Endlage des Ventilschiebers wirksame Aufpralldämpfungsstruktur ein im Hubweg des Ventilschiebers angeordneter integraler Bestandteil der Deckeldichtung. Auf diese Weise erübrigt sich eine eigenständige Montage der Aufpralldämpfungsstruktur. Beim Einbau der Deckeldichtung wird automatisch auch die Aufpralldämpfungsstruktur installiert, da diese keine bezüglich der Deckeldichtung gesonderte Komponente ist, sondern in Baueinheit mit der Deckeldichtung ausgeführt ist. Durch die Montage nur eines einzigen Bauteils werden also gleichzeitig zwei funktionelle Komponenten montiert, einerseits die Deckeldichtung und andererseits auch die Aufpralldämpfungsstruktur. Vorteilhaft ist in diesem Zusammenhang auch, dass die Herstellungskosten gering gehalten werden können, weil nur noch ein Bauteil hergestellt werden muss, um die beiden Funktionen der Abdichtung der Ventilkammer und der Aufpralldämpfung zu verwirklichen. Die Deckeldichtung weist eine axial zwischen dem Abschlussdeckel und dem Gehäusekörper angeordnete Dichtungsstruktur auf, wobei die Aufpralldämpfungsstruktur mit radialem Abstand zu der Dichtungsstruktur angeordnet ist, sodass die von ihr belegte Fläche kleiner ist als die von der Dichtungsstruktur umrahmte Fläche. Damit verbunden ist eine erhebliche Materialersparnis für die Herstellung der Deckeldichtung.

Vorteilhafte Weiterbildungen der Erfindung gehen aus den Unteransprüchen hervor.

Die Deckeldichtung ist zweckmäßigerweise so ausgebildet, dass die Dichtungsstruktur die Aufpralldämpfungsstruktur umrahmt.

Der mindestens eine Haltearm erstreckt sich zweckmäßigerweise in bezüglich der Längsachse der Ventilkammer radialer Richtung.

Als besonders vorteilhaft wird es angesehen, wenn die Deckeldichtung über mehrere Haltearme verfügt, die rings um die Aufpralldämpfungsstruktur angeordnet sind und die sich jeweils zwischen der Aufpralldämpfungsstruktur und der zwischen dem Abschlussdeckel und dem Gehäusekörper eingegliederten Dichtungsstruktur erstrecken. Auf diese Weise ergibt sich eine stabile Lagefixierung der Aufpralldämpfungsstruktur bei geringem Materialaufwand. Mindestens ein zwischen zwei Haltearmen angeordneter Zwischenraum der Deckeldichtung kann bei entsprechender Ausgestaltung des Mehrwegeventils als eine Strömungsöffnung genutzt werden, die einen im Abschlussdeckel ausgebildeten Fluidkanal mit der Ventilkammer verbindet. Bei diesem Fluidkanal handelt es sich insbesondere um einen Antriebskanal, durch den hindurch ein Antriebsfluid in die Ventilkammer einspeisbar und aus der Ventilkammer abführbar ist, um die Hubbewegung des Ventilschiebers zwecks Veränderung der Schaltstellung des Ventilschiebers hervorzurufen.

Besonders zweckmäßig ist eine zur Ventilkammer koaxiale Anordnung der Aufpralldämpfungsstruktur. Auf diese Weise werden die Aufprallkräfte symmetrisch aufgefangen, sodass die Strukturen des Ventilgehäuses und des Ventilschiebers so wenig wie möglich beansprucht werden.

Es ist weiterhin vorteilhaft, wenn die Aufpralldämpfungsstruktur ringförmig ausgebildet ist. Beispielsweise kann die Aufpralldämpfungsstruktur nach Art einer Hülse ausgestaltet sein.

Die Deckeldichtung unterteilt sich funktionell in mehrere Abschnitte. Zum einen enthält sie zweckmäßigerweise die schon angesprochene Dichtungsstruktur und zum anderen die Aufpralldämpfungsstruktur. Die Dichtungsstruktur ihrerseits kann je nach Aufbau des Mehrwegeventils in unterschiedliche funktionelle Abschnitte eingeteilt sein, wobei sie insbesondere einen die Ventilkammer umrahmenden ringförmigen Dichtungsabschnitt aufweist, der als Kammerdichtungsabschnitt bezeichnet sei. Weiterhin kann die Dichtungsstruktur mindestens einen mit dem Kammerdichtungsabschnitt verbundenen Dichtungsabschnitt aufweisen, der mindestens eine beabstandet zur Ventilkammer angeordnete Kanalmündung des Abschlussdeckels umrahmt und aus diesem Grund als Kanaldichtungsabschnitt bezeichnet sei. Mit Hilfe des Kanaldichtungsabschnittes kann beispielsweise eine Kanalverbindung zwischen einem in dem Abschlussdeckel verlaufenden und einem im Ventilgehäuse verlaufenden Fluidkanal bewirkt werden. Diese Kanalverbindung dient im Falle eines vorgesteuerten Mehrwegeventils insbesondere dazu, das zur Fluidbeaufschlagung des Ventilschiebers erforderliche Antriebsfluid zuzuführen oder abzuführen.

Vorzugsweise ist die Deckeldichtung maskenförmig strukturiert. Sie kann sich in diesem Zusammenhang aus mehreren insbesondere einstückig miteinander verbundenen stegartigen Abschnitten zusammensetzen.

Die auch die Aufpralldämpfungsstruktur enthaltende integrale Deckeldichtung ist vorzugsweise einstückig ausgebildet. Zweckmäßigerweise bestehen eine zur Abdichtung zwischen dem Abschlussdeckel und dem Gehäusekörper dienende Dichtungsstruktur und die Aufpralldämpfungsstruktur aus dem gleichen Material und dabei vorzugsweise aus einem Material mit gummielastischen Eigenschaften, insbesondere einem Elastomermaterial. Es besteht aber beispielsweise auch die Möglichkeit, die Deckeldichtung als Mehrkomponenten-Spritzgießteil auszubilden, sodass die angesprochene Dichtungsstruktur aus einem anderen Material als die Aufpralldämpfungsstruktur besteht. Man hat somit den Vorteil, die Dichtungsstruktur hinsichtlich der Dichtungsfunktion und die Aufpralldämpfungsstruktur hinsichtlich der Dämpfungsfunktion unabhängig voneinander optimieren zu können.

Die Deckeldichtung kann unmittelbar bei ihrer Herstellung als Spritzgießteil an den Abschlussdeckel angeformt werden. Eine andere, derzeit bevorzugte Ausführungsform sieht vor, die Deckeldichtung als bezüglich des Ventilgehäuses separates Bauteil zu realisieren. Die Montage ist hierbei besonders einfach, wenn in dem Abschlussdeckel an der dem Gehäusekörper zugewandten Stirnfläche eine Haltenutstruktur ausgebildet ist, in die die Deckeldichtung lagerichtig fixiert einsetzbar oder eingesetzt ist.

Insbesondere bei hohen Hubgeschwindigkeiten des Ventilschiebers ist es zweckmäßig, wenn die Aufpralldämpfungsstruktur nicht die gesamte Aufprallenergie des Ventilschiebers aufzunehmen hat. Dadurch wird die Belastung der Aufpralldämpfungsstruktur verringert und ihre Lebensdauer erhöht. Um dieses Ziel zu erreichen, verfügt der Abschlussdeckel an seiner der Ventilkammer zugewandten Stirnseite zweckmäßigerweise über mindestens ein bezüglich der Deckeldichtung insbesondere gesondert ausgebildetes Anschlagmittel, das von der Aufpralldämpfungsstruktur in Richtung zur Ventilkammer axial überragt wird und einen Festanschlag bildet. Gleichzeitig ist die Aufpralldämpfungsstruktur so gestaltet, dass sie beim Aufprall des Ventilschiebers um ein definiertes Maß verformbar ist, und zwar derart, dass der Ventilschieber ab einer bestimmten Aufprallenergie die Aufpralldämpfungsstruktur so weit verformt, dass er auch an dem mindestens einen Anschlagmittel zur Anlage gelangt. Dadurch wird die verbleibende Restenergie unmittelbar vom Abschlussdeckel aufgenommen und die Aufpralldämpfungsstruktur wird geschont.

Vorzugsweise ist das mindestens eine Anschlagmittel von der Aufpralldämpfungsstruktur umrahmt. Ferner ist das Anschlagmittel insbesondere so angeordnet, dass es auf einer Linie mit der Längsachse der Ventilkammer liegt und der Ventilschieber folglich mittig darauf auftrifft, wenn er die Endlage erreicht.

Bei dem Mehrwegeventil kommt zweckmäßigerweise ein radial abdichtendes Ventilsitzkonzept zum Einsatz. So enthält das Mehrwegeventil zweckmäßigerweise eine den Ventilschieber radial außen umschließende und bezüglich des Ventilgehäuses ortsfest angeordnete äußere Ventilsitzstruktur mit mehreren ringförmigen, axial beabstandeten und dabei nach radial innen weisenden ringförmigen äußeren Ventilsitzflächen. Der Ventilschieber ist an seinem radialen Außenumfang mit einer inneren Ventilsitzstruktur ausgestattet, die zweckmäßigerweise mehrere nach radial außen weisende ringförmige innere Ventilsitzflächen aufweist und die mit der äußeren Ventilsitzstruktur in einer Weise zusammenwirken kann, dass der Dichtkontakt zwischen den radial einander zugewandten Ventilsitzflächen hergestellt wird. Je nach Schaltstellung des Ventilschiebers ergibt sich ein unterschiedliches Zusammenwirken zwischen der inneren Ventilsitzstruktur und der äußeren Ventilsitzstruktur mit dem Resultat unterschiedlicher Verbindungsmuster zwischen in die Ventilkammer umfangsseitig einmündenden Ventilkanälen.

Die für die gesteuerte Erzeugung der Hubbewegung dienenden Antriebsmittel bestehen zweckmäßigerweise aus einer elektrofluidischen Vorsteuerventileinrichtung. Eine solche Vorsteuerventileinrichtung kann je nach Ausgestaltung des Mehrwegeventils ein oder zwei elektrisch betätigbare Vorsteuerventile enthalten, beispielsweise Magnetventile oder Piezoventile. Ist das Mehrwegeventil mit einer Vorsteuerventileinrichtung ausgestattet, kann der Abschlussdeckel eine Doppelfunktion haben, wobei er einerseits die Ventilkammer stirnseitig verschließt und andererseits auch einen Bestandteil der Vorsteuerventileinrichtung bildet, insbesondere einen ein elektrisch betätigbares Vorsteuerventil tragenden Sockel.

Das Mehrwegeventil kann an beiden Stirnseiten der Ventilkammer über einen separaten Abschlussdeckel verfügen, dem eine mit einer integrierten Aufpralldämpfungsstruktur versehene Deckeldichtung zugeordnet ist.

Nachfolgend wird die Erfindung anhand der beiliegenden Zeichnung näher erläutert. In dieser zeigen:
- Figur 1: eine bevorzugte Ausführungsform des erfindungsgemäßen Mehrwegeventils in einem Längsschnitt, wobei Ausschnitte der beiden Endbereiche ergänzend separat vergrößert abgebildet sind,
- Figur 2: eine Einzeldarstellung von einem der mit einer Deckeldichtung bestückten Abschlussdeckel in isometrischer Darstellung, und
- Figur 3: eine isometrische Einzeldarstellung der bei dem Mehrwegeventil der Figuren 1 und 2 zum Einsatz kommenden integralen Deckeldichtung.

Aus der Zeichnung ist ein insgesamt mit Bezugsziffer 1 bezeichnetes Mehrwegeventil ersichtlich, das zur Steuerung von Fluidströmen einsetzbar ist, insbesondere zur Verwendung in Verbindung mit Druckluft. Das Mehrwegeventil 1 besitzt ein Ventilgehäuse 2, in dem ein länglicher Ventilschieber 3 axial bewegbar angeordnet ist, sodass er unter Ausführung einer durch einen Doppelpfeil angedeuteten Hubbewegung 4 zwischen verschiedenen Schaltstellungen umschaltbar ist. Die Hubbewegung 4 ist durch eine gesteuerte Fluidbeaufschlagung des Ventilschiebers 3 hervorrufbar.

Zur Steuerung der Fluidbeaufschlagung des Ventilschiebers 2 ist das Mehrwegeventil 1 vorzugsweise von elektro-fluidisch vorgesteuerter Bauart. Es enthält eine elektro-fluidische Vorsteuerventileinrichtung 5, die mittels elektrischer Steuersignale betätigbar ist, um den Ventilschieber 3 in axialer Richtung gesteuert mit einem die Hubbewegung 4 hervorrufenden Antriebsfluid zu beaufschlagen. Bei dem Antriebsfluid handelt es sich vorzugsweise um Druckluft. Elektrische Kontaktmittel 6 der Vorsteuerventileinrichtung 5 ermöglichen die Einspeisung der erwähnten elektrischen Betätigungssignale.

Je nachdem, ob die Hubbewegung 4 in nur einer oder in beiden möglichen Bewegungsrichtungen durch aktive Fluidbeaufschlagung hervorrufbar sein soll, enthält die Vorsteuerventileinrichtung 5 entweder nur ein oder, wie beim Ausführungsbeispiel, zwei elektrisch betätigbare Vorsteuerventile 5a, 5b. Jedes Vorsteuerventil 5a, 5b ist beim Ausführungsbeispiel ein Magnetventil, könnte aber beispielsweise auch als Piezoventil ausgeführt sein. Da der Aufbau von elektrisch betätigbaren Vorsteuerventilen als solches dem Fachmann bekannt ist, wird an dieser Stelle auf eine detaillierte Erläuterung der Vorsteuerventile 5a, 5b als solches verzichtet.

Der Ventilschieber 3 befindet sich in einer im Innern des Ventilgehäuses 2 ausgebildeten Ventilkammer 7. Die Ventilkammer 7 hat, wie auch der Ventilschieber 3, eine längliche Gestalt und verfügt über eine Längsachse 8, die mit der Längsachse 9 des Ventilschiebers 3 zusammenfällt.

Der Ventilschieber 3 ist kürzer als die Ventilkammer 7, sodass er in der Ventilkammer 7 die Hubbewegung 4 ausführen kann. Im Rahmen dieser Hubbewegung 4 ist der Ventilschieber 3 in wenigstens zwei Schaltstellungen positionierbar, die beim Ausführungsbeispiel zwei einander entgegengesetzte Hubendlagen des Ventilschiebers 3 sind. In der Zeichnung ist der Ventilschieber 3 bei Einnahme seiner rechten Hubendlage gezeigt. Jede Hubendlage des Ventilschiebers 3 ist dadurch charakterisiert, dass der Ventilschieber 3 mit einer Stirnseite an einer von zwei die Ventilkammer 7 axial beidseits verschließenden stirnseitigen Abschlusswänden 12a, 12b des Ventilgehäuses 2 anliegt. In der aus der Zeichnung ersichtlichen ersten Hubendlage liegt der Ventilschieber 3 mit seinem in der Zeichnung nach rechts orientierten ersten Endabschnitt 13a an einer zugeordneten ersten stirnseitigen Abschlusswand 12a an, während er in der entgegengesetzten zweiten Hubendlage mit einem dem ersten Endabschnitt 13a axial entgegengesetzten zweiten Endabschnitt 13b an einer zu der ersten stirnseitigen Abschlusswand 12a beabstandeten zweiten stirnseitigen Abschlusswand 12b anliegt.

An jedem Endabschnitt 13a, 13b enthält der Ventilschieber 3 eine der gegenüberliegenden stirnseitigen Abschlusswand 12a, 12b zugewandte stirnseitige Antriebsfläche 14. Diese Antriebsfläche 14 begrenzt mit der jeweils axial gegenüberliegenden stirnseitigen Abschlusswand 12a beziehungsweise 12b eine von einem Längenabschnitt der Ventilkammer 7 begrenzte erste Antriebskammer 15a beziehungsweise zweite Antriebskammer 15b. In die erste Antriebskammer 15a mündet ein erster Antriebskanal 16a, in die zweite Antriebskammer 15b mündet ein zweiter Antriebskanal 16b. Beide Antriebskanäle 16a, 16b verlaufen in der Wandung des Ventilgehäuses 2 und dienen zur Zufuhr und Abfuhr des erwähnten Antriebsfluides in die beziehungsweise aus der zugeordneten Antriebskammer 15a, 15b. Auf diese Weise kann wahlweise die Antriebsfläche 14 des ersten Endabschnittes 13a oder die Antriebsfläche 14 des zweiten Endabschnittes 13b des Ventilschiebers 3 mit Antriebsfluid beaufschlagt werden, um den Ventilschieber 3 zu verschieben und in einer der beiden möglichen Hubendlagen zu positionieren.

Jeder Antriebskanal 16a, 16b führt zu einem der beiden Vorsteuerventile 5a, 5b und kann durch entsprechende Betätigung des zugeordneten Vorsteuerventils 5a, 5b wahlweise mit einer Quelle für das Antriebsfluid oder mit eine Drucksenke, insbesondere mit der Atmosphäre, verbunden werden. Hierzu verfügt jedes Vorsteuerventil 5a, 5b über ein nicht weiter abgebildetes Vorsteuerventilglied. Zur Verbindung mit der Atmosphäre enthält jedes Vorsteuerventil 5a, 5b einen Vorsteuer-Entlüftungskanal 17a, 17b. Zur Verbindung mit der Antriebsfluidquelle ist jedem Vorsteuerventil 5a, 5b ein Vorsteuer-Speisekanal 18a, 18b zugeordnet. Jedes Vorsteuerventil 5a, 5b ist in der Lage, den zugehörigen Antriebskanal 16a, 16b mit wahlweise einem Vorsteuer-Entlüftungskanal 17a, 17b oder einem Vorsteuer-Speisekanal 18a, 18b zu verbinden.

Das Mehrwegeventil 1 des Ausführungsbeispiels ermöglicht eine Betriebsweise, bei der durch abwechselnde gegensinnige Fluidbeaufschlagung und Entlüftung der beiden Antriebskammern 15a, 15b der Ventilschieber 3 wahlweise in der ersten oder in der zweiten Hubendlage positionierbar ist. Eine nicht abgebildete ausführungsform des Mehrwegeventils 1 ist von monostabiler Bauart und enthält nur eine steuerbare Antriebskammer, wobei die Umschaltkraft in der anderen Bewegungsrichtung durch Federmittel bereitgestellt wird, beispielsweise durch eine mechanische Feder oder durch eine Luftfeder.

In die Ventilkammer 7 münden umfangsseitig mehrere die Wandung des Ventilgehäuses 2 durchsetzende Ventilkanäle 22 ein. Diese Ventilkanäle 22 werden in Abhängigkeit von der Schaltstellung des Ventilschiebers 3 in unterschiedlichen Mustern miteinander verbunden und voneinander abgetrennt.

Illustriert ist ein Mehrwegeventil in einer 5/2-Wege-Ausführung. In diesem Zusammenhang enthält es insgesamt fünf Ventilkanäle, die einen Speisekanal 22a, zwei Arbeitskanäle 22b, 22c und zwei Entlüftungskanäle 22d, 22e bilden. Diese Ventilkanäle 22 münden in axial aufeinanderfolgend angeordnete, als Steuerkammer-Längenabschnitte bezeichnete Längenabschnitte einer Steuerkammer 23 ein, die von dem sich zwischen den beiden Antriebskammern 15a, 15b erstreckenden Längenabschnitt der Ventilkammer 7 gebildet ist. Diese diversen Steuerkammer-Längenabschnitte der Steuerkammer 23 sind von einer bezüglich des Ventilgehäuses 2 ortsfesten äußeren Ventilsitzstruktur 24 voneinander abgeteilt, die axial gleitverschieblich von dem Ventilschieber 3 durchsetzt ist, dessen radial nach außen orientierter Außenumfang eine innere Ventilsitzstruktur 25 aufweist oder bildet.

Die äußere Ventilsitzstruktur 24 enthält mehrere axial beabstandet zueinander angeordnete ringförmige äußere Ventilsitzflächen 24a, die den Ventilschieber 3 konzentrisch umschließen und der Außenumfangsfläche des Ventilschiebers 3 radial zugewandt sind. Die innere Ventilsitzstruktur 25 besteht beim Ausführungsbeispiel aus den zylindrischen Außenflächenabschnitten 25a mehrerer zylindrischer Längenabschnitte größeren Durchmessers des Ventilschiebers 3, zwischen denen sich Längenabschnitte kleineren Durchmessers des Ventilschiebers 3 erstrecken.

Je nach Schaltstellung beziehungsweise Hubendlage des Ventilschiebers 3 kommen die diversen Außenflächenabschnitte 25a der inneren Ventilsitzstruktur 25 des Ventilschiebers 3 mit unterschiedlichen äußeren Ventilsitzflächen 24a der am Ventilgehäuse 2 angeordneten äußeren Ventilsitzstruktur 24 radial dichtend zur Anlage, um die Ventilkanäle 22 in unterschiedlichem Muster miteinander zu verbinden und voneinander abzutrennen.

Bei der Hubbewegung 4 gleitet die innere Ventilsitzstruktur 25 an der äußeren Ventilsitzstruktur 24 entlang.

Zur Bildung der äußeren Ventilsitzflächen 24a enthält die äußere Ventilsitzstruktur 24 zweckmäßigerweise mehrere ringförmige Dichtelemente, die mit axialem Abstand zueinander in der Ventilkammer 7 platziert und von dem Ventilschieber 3 durchsetzt sind. Die zwischen axial benachbarten Dichtelementen liegenden Bereiche der Steuerkammer 23 sind die oben erwähnten Steuerkammer-Längenabschnitte.

Der Ventilschieber 3 des Ausführungsbeispiels ist mehrteilig ausgebildet. Er enthält einen die innere Ventilsitzstruktur 25 bildenden länglichen Steuerkörper 26 und zwei dem Steuerkörper 26 axial beidseits vorgelagerte Antriebskolben 27a, 27b, an denen die Antriebsflächen 14 ausgebildet sind. Die Antriebskolben 27a, 27b liegen an dem Steuerkörper 26 stirnseitig an, ohne mit ihm fest verbunden zu sein. Bei einem nicht illustrierten Ausführungsbeispiel sind die Antriebskolben 27a, 27b allerdings fest mit dem Steuerkörper 26 verbunden und insbesondere einteilig oder einstückig mit dem Steuerkörper 26 ausgebildet.

An wenigstens einer Stirnseite und vorzugsweise an beiden Stirnseiten ist die Ventilkammer 7 durch einen eigenen Abschlussdeckel 28 verschlossen. Der eine Abschlussdeckel 28 gehört zur ersten stirnseitigen Abschlusswand 12a, der andere Abschlussdeckel 28 zur zweiten stirnseitigen Abschlusswand 12b. Peripher, also am radialen Außenumfang, ist die Ventilkammer 7 durch einen bezüglich der beiden Abschlussdeckel 28 separaten Gehäusekörper 32 begrenzt. Der Gehäusekörper 32 hat zwei axial einander entgegengesetzt orientierte erste und zweite Gehäusestirnflächen 33a, 33b, an denen der jeweils zugeordnete Abschlussdeckel 28 mit einer inneren Deckelstirnfläche 34 anliegt.

Jeder Abschlussdeckel 28 ist mittels nur schematisch angedeuteter Befestigungsmittel 35, die insbesondere von Befestigungsschrauben gebildet sind, am Gehäusekörper 32 befestigt. Auf diese Weise ist jede innere Deckelstirnfläche 34 zweckmäßigerweise mit der zugewandten ersten Gehäusestirnfläche 33a, 33b verspannt.

Das Ventilgehäuse 2 ist insbesondere so ausgebildet, dass sich die Ventilkammer 7 mit ihrer gesamten Länge innerhalb des Gehäusekörpers 32 erstreckt und die Abschlussdeckel 28 lediglich die stirnseitige Begrenzung der Ventilkammer 7 bilden.

Zwischen den Gehäusekörper 32 und jeden Abschlussdeckel 28 ist axial eine Deckeldichtung 36 eingegliedert. Die Deckeldichtung 36 hat eine axial zwischen der inneren Deckelstirnfläche 34 und der dieser zugewandten ersten beziehungsweise zweiten Gehäusestirnfläche 33a, 33b angeordnete Dichtungsstruktur 37, die eine fluiddichte Verbindung zwischen dem Abschlussdeckel 28 und dem Gehäusekörper 32 schafft. Auf diese Weise ist ein Fluidaustritt aus der Ventilkammer 7 zur Atmosphäre ausgeschlossen. Jede Deckeldichtung 36 gehört zweckmäßigerweise zu einer der beiden stirnseitigen Abschlusswände 12a, 12b.

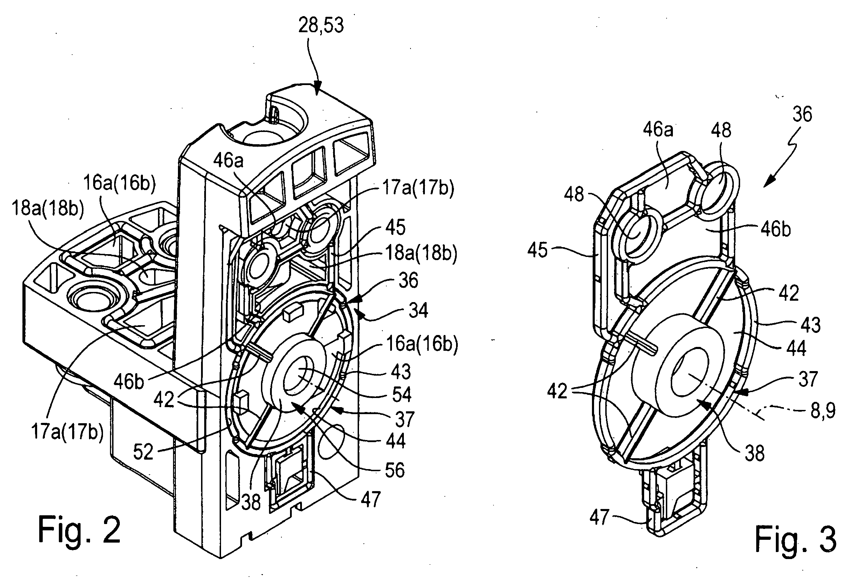

In den Figuren 2 und 3 ist eine der Abschlusswände 12a einschließlich eines der Abschlussdeckel 28 und einer der Deckeldichtungen 36 ersichtlich. Vorzugsweise sind die beiden Abschlussdeckel 28 und die beiden Deckeldichtungen 36 identisch, sodass sich die Beschreibung auf eines der Exemplare beschränken kann.

Bei einem nicht gezeigten Ausführungsbeispiel ist die Ventilkammer 7 nur an einer Stirnseite durch einen separaten Abschlussdeckel 28 und eine zugeordnete Deckeldichtung 36 verschlossen. Die Abschlusswand an der anderen Stirnseite ist dort einstückig mit dem Gehäusekörper 32 ausgebildet und bedarf keiner Deckeldichtung.

Ein Vorteil der Deckeldichtung 36 besteht darin, dass sie als integralen Bestandteil auch eine Aufpralldämpfungsstruktur 38 aufweist, die im Betrieb des Mehrwegeventils 1 axial zwischen dem Ventilschieber 3 und dem zugeordneten Abschlussdeckel 28 wirksam ist, um den Aufprall des Ventilschiebers 3 bei Erreichen seiner Hubendlage zu dämpfen. Die Aufpralldämpfungsstruktur 38 hat eine gewisse Nachgiebigkeit, wobei sie vorzugsweise elastisch nachgiebig ist, sodass der Ventilschieber 3 während einer kurzen Dämpfungswegstrecke, die dem Verformungsweg der Aufpralldämpfungsstruktur 38 entspricht, wirksam abgebremst wird. Auf diese Weise wird die strukturelle Belastung des Mehrwegeventils 1 auf einem relativ niedrigen Niveau gehalten und es sind ohne Beschädigungsgefahr hohe Hubbewegungsgeschwindigkeiten des Ventilschiebers 3 möglich.

Dadurch, dass die Aufpralldämpfungsstruktur 38 ein integraler Bestandteil der Deckeldichtung 36 ist, ist mit einem einheitlichen Montagevorgang die Deckeldichtung 36 einschließlich ihrer Dichtungsstruktur 37 und einschließlich der Aufpralldämpfungsstruktur 38 montierbar. Dies spart Montagezeit und folglich auch Montagekosten. Auch die Herstellungskosten können reduziert werden, weil für die beiden Funktionen der Gehäuseabdichtung und der Aufpralldämpfung auf ein einziges Bauteil zurückgegriffen werden kann.

Wie insbesondere aus Figuren 2 und 3 ersichtlich ist, wird die Aufpralldämpfungsstruktur 38 von der Dichtungsstruktur 37 zweckmäßigerweise umrahmt. Dabei ist die Aufpralldämpfungsstruktur 38 bevorzugt mit radialem Abstand zu der Dichtungsstruktur 37 angeordnet und mittels mehrerer Haltearme 42 an der Dichtungsstruktur 37 befestigt.

Die Haltearme 42 sind in der Umfangsrichtung der Ventilkammer 7 rings um die Aufpralldämpfungsstruktur 38 verteilt und dabei in dieser Umfangsrichtung mit Abstand zueinander angeordnet. Sie können beispielsweise sternförmig von der Aufpralldämpfungsstruktur 38 wegragen. Jeder Haltearm 42 erstreckt sich insbesondere radial bezüglich der Längsachse 8 der Ventilkammer 7.

Als besonders vorteilhaft hat es sich erwiesen, die Haltearme 42 stegförmig zu gestalten. Jeder Haltearm 42 kann in diesem Fall auch als Haltesteg bezeichnet werden. Exemplarisch ist die Aufpralldämpfungsstruktur 38 mittels dreier Haltearme 42 an der die Aufpralldämpfungsstruktur 38 umrahmenden Dichtungsstruktur 37 fixiert.

Konkret sind die Haltearme 42 beim Ausführungsbeispiel seitens der Dichtungsstruktur 37 an einem ringförmigen Abschnitt der Dichtungsstruktur 37 befestigt, der aufgrund seiner Funktion, die Ventilkammer 7 abzudichten, als Kammerdichtungsabschnitt 43 bezeichnet sei. Der Kammerdichtungsabschnitt 43 ist insbesondere kreisförmig konturiert.

Bei einem nicht gezeigten Ausführungsbeispiel ist die Aufpralldämpfungsstruktur 38 mittels nur eines einzigen Haltearmes 42 an der Dichtungsstruktur 37 befestigt, wobei dieser einzige Haltearm 42 zur Gewährleistung einer guten Stabilität laschenartig oder plattenartig ausgeführt sein kann.

Die Aufpralldämpfungsstruktur 38 ist zweckmäßigerweise koaxial zur Ventilkammer 7 angeordnet, sodass der Ventilschieber 3 mit seiner Antriebsfläche 14 symmetrisch darauf aufprallt, wenn er in eine Hubendlage geschoben wird.

Dem Verformungsverhalten der Aufpralldämpfungsstruktur 38 ist es förderlich, wenn sie ringförmig ausgebildet ist, was beim Ausführungsbeispiel der Fall ist. Die ringförmige Aufpralldämpfungsstruktur 38 kann beim Dämpfungsvorgang axial gestaucht werden, wobei sie sich radial sowohl nach außen als auch nach innen ausdehnen kann.

Bevorzugt besteht die Aufpralldämpfungsstruktur 38 aus einem Material mit gummielastischen Eigenschaften, insbesondere einem Elastomermaterial. Dies gilt zweckmäßigerweise für die gesamte Deckeldichtung 36. Es ist von Vorteil, wenn die gesamte Deckeldichtung 36 einheitlich aus einem einzigen, gleichen Material besteht.

Grundsätzlich besteht aber auch die Möglichkeit, verschiedene Abschnitte der Deckeldichtung 36 aus unterschiedlichem Material herzustellen und dabei insbesondere für die Aufpralldämpfungsstruktur 38 ein anderes Material zu wählen als für die Dichtungsstruktur 37. Dennoch bietet sich auch hier eine einstückige Ausgestaltung an.

Bei einem nicht gezeigten Ausführungsbeispiel ist die Aufpralldämpfungsstruktur 38 separat bezüglich der Dichtungsstruktur 37 ausgebildet und durch geeignete Befestigungsmaßnahmen, beispielsweise durch eine Rastverbindung oder durch eine Klebeverbindung, an der Dichtungsstruktur 37 fixiert.

Zweckmäßigerweise umrahmt die Deckeldichtung 36 eine sie durchsetzende Strömungsöffnung 44. Diese Strömungsöffnung 44 ist beim Ausführungsbeispiel von zwei Haltearmen 42 und einem sich zwischen diesen Haltearmen 42 erstreckenden Umfangsabschnitt des Kammerdichtungsabschnittes 43 begrenzt. Diese Strömungsöffnung 44 verbindet den im Abschlussdeckel 28 ausgebildeten Antriebskanal 16a beziehungsweise 16b mit der zugeordneten Antriebskammer 15a, 15b. Somit kann das Antriebsfluid durch die Deckeldichtung 36 hindurch zuströmen und abströmen.

Die Deckeldichtung 36 kann in vorteilhafter Weise auch noch dahingehend ausgebildet sein, dass sie weitere Kanalverbindungen zwischen dem Abschlussdeckel 28 und dem Gehäusekörper 32 abdichtet. Dies trifft auf das Ausführungsbeispiel zu.

In diesem Zusammenhang enthält die Deckeldichtung 36 mindestens einen Kanaldichtungsabschnitt 45, der mit dem Kammerdichtungsabschnitt 43 einstückig verbunden ist und mindestens eine weitere Strömungsöffnung 46a, 46b umrahmt. Der mindestens eine Kanaldichtungsabschnitt 45 schließt sich bevorzugt radial außen an den Kammerdichtungsabschnitt 43 an.

Die oben erwähnten Vorsteuer-Entlüftungskanäle 17a, 17b und Vorsteuer-Speisekanäle 18a, 18b verlaufen jeweils mit einem Längenabschnitt im Abschlussdeckel 28 und mit einem weiteren Längenabschnitt im Gehäusekörper 32. Ineinander über gehen sie im Fügebereich zwischen dem Abschlussdeckel 28 und dem Gehäusekörper 32, also dort, wo sich jeweils die innere Deckelstirnfläche 34 und eine der Gehäusestirnflächen 33a, 33b gegenüberliegen. Der Kanaldichtungsabschnitt 45 ist nun so ausgebildet, dass die weiteren Strömungsöffnungen 46a, 46b die in dem genannten Fügebereich angeordneten Kanalmündungen des Vorsteuer-Entlüftungskanals 17a, 17b und des Vorsteuer-Speisekanals 18a, 18b umrahmen und dadurch einen zur Umgebung hin fluiddichten Fluidübertritt ermöglichen.

In der Zeichnung ist noch ein weiterer Kanaldichtungsabschnitt 47 ersichtlich, der sich an einer anderen Umfangsstelle des Kammerdichtungsabschnittes 43 befindet. Er ist beispielsweise zur Abdichtung eines Entlüftungskanals nutzbar, der als Atmungskanal fungiert und mit demjenigen Längenabschnitt der Ventilkammer 7 in Verbindung steht, der sich an der der Antriebskammer 15a, 15b entgegengesetzten Rückseite unmittelbar an den Antriebskolben 27a, 27b anschließt.

Vor allem die Figur 3 zeigt, dass die Deckeldichtung 36 zweckmäßigerweise maskenartig strukturiert ist. Dabei kann die Dichtungsstruktur 37 auch noch zwei Augen 48 ausbilden, die von den Befestigungsmitteln 35 durchsetzt sind.

Bei der Deckeldichtung 36 handelt es sich vorzugsweise um ein bezüglich des Ventilgehäuses 2 und insbesondere auch bezüglich des Abschlussdeckels 28 gesondertes Bauteil. Eine solche separate Gestaltung der Deckeldichtung 36 ist in Figur 3 illustriert. Zweckmäßigerweise ist in der inneren Deckelstirnfläche 34 eine Haltenutstruktur 52 ausgebildet, in die die Dichtungsstruktur 37 formschlüssig eingreift. Auf diese Weise kann die Dichtungsstruktur 37 vor der Montage des Abschlussdeckels 28 in die Haltenutstruktur 52 eingelegt und dann zusammen mit dem Abschlussdeckel 28 an den Gehäusekörper 32 angesetzt werden.

Bei einem nicht gezeigten Ausführungsbeispiel ist die Deckeldichtung 36 als Baueinheit mit dem Abschlussdeckel 28 realisiert und durch Spritzgießen unmittelbar bei ihrer Herstellung an den Abschlussdeckel 28 angeformt.

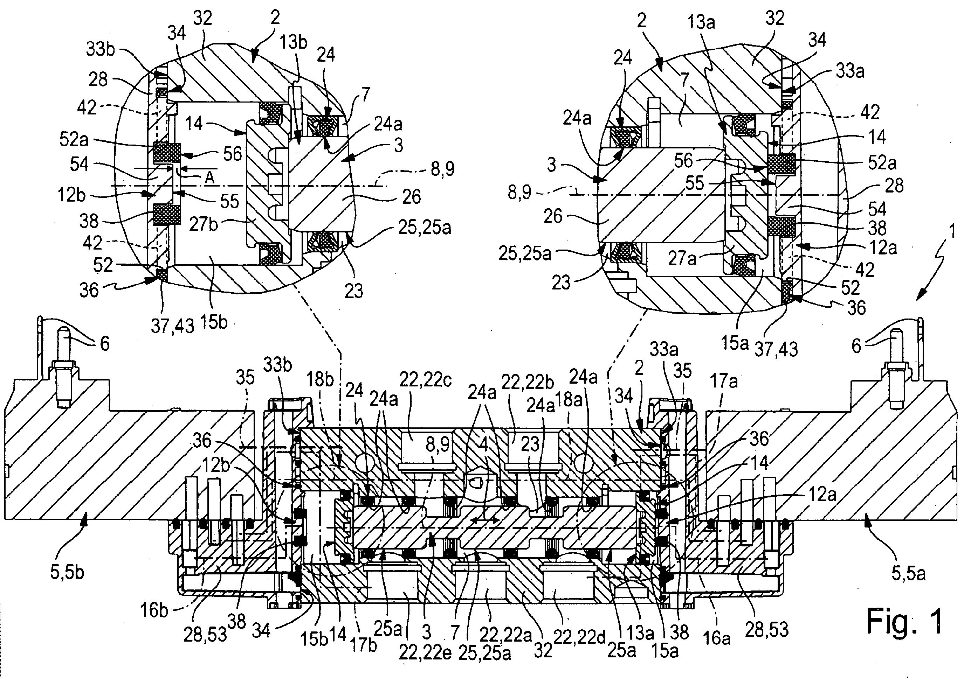

Die Figur 1 macht deutlich, dass der Abschlussdeckel 28 in vorteilhafter Weise als ein Sockel 53 ausgebildet sein kann, der mindestens ein Vorsteuerventil 5a, 5b trägt, wenn das Mehrwegeventil 1 von vorgesteuerter Bauart ist.

Die Aufpralldämpfungsstruktur 38 ist vorzugsweise funktionell mit einem am Abschlussdeckel 28 ausgebildeten Anschlagmittel 54 kombiniert. Das Anschlagmittel 54 definiert einen Festanschlag und ist derart konzipiert, dass es beim Aufprall des Ventilschiebers 3 nicht nachgibt. Vorzugsweise ist es unmittelbar von einem Abschnitt des Abschlussdeckels 28 gebildet. Das Anschlagmittel 54 ist bevorzugt ein einstückiger Bestandteil des aus Kunststoffmaterial oder aus Metall bestehenden Abschlussdeckels 28.

Die Aufpralldämpfungsstruktur 38 ist demgegenüber nachgiebig, sodass sie durch die Aufprallenergie des Ventilschiebers 3 reversibel verformbar ist. Die Aufpralldämpfungsstruktur 38 und das mindestens eine Anschlagmittel 54 sind funktionell parallelgeschaltet und dabei so aufeinander abgestimmt, dass der Ventilschieber 3 bei Annäherung an eine Hubendlage zuerst auf die Aufpralldämpfungsstruktur 38 auftrifft und mit dem Anschlagmittel 54 erst in Kontakt treten kann, nachdem er die Aufpralldämpfungsstruktur 38 ein Stückweit axial verformt hat.

Somit wird zunächst ein Großteil der Aufprallenergie des Ventilschiebers 3 durch die sich verformende Aufpralldämpfungsstruktur 38 aufgenommen, während die dann noch verbleibende Restenergie unter Vermittlung des Anschlagmittels 54 direkt in den Abschlussdeckel 28 eingeleitet wird.

Um diesen Effekt zu erhalten, ist der Abschlussdeckel 28 beim Ausführungsbeispiel an der der Ventilkammer 7 zugewandten inneren Deckelstirnfläche 34 im Querschnittsbereich der Ventilkammer 7 mit einem Anschlagmittel 54 ausgestattet, das eine dem Ventilschieber 3 zugewandte Anschlagfläche 55 aufweist, wobei die Aufpralldämpfungsstruktur 38 derart ausgebildet und angeordnet ist, dass sie bezüglich des Anschlagmittels 54 in Richtung der Ventilkammer 7 axial vorsteht. Die Aufpralldämpfungsstruktur 38 hat eine dem Ventilschieber 3 zugewandte Aufprallfläche 56, die um einen Abstand "A" axial näher beim Ventilschieber 3 liegt als die Anschlagfläche 55 des Anschlagmittels 54. Nähert sich der Ventilschieber 3 bei seiner Hubbewegung 4 an eine Hubendlage an, prallt er mit der voreilenden Antriebsfläche 14 zuerst auf die Aufprallfläche 56 auf und erst nach Zurücklegen einer weiteren Wegstrecke, die dem Abstand "A" entspricht, auf die die Hubendlage endgültig vorgebende Anschlagfläche 55.

Zweckmäßigerweise ist das Anschlagmittel 54 von der Aufpralldämpfungsstruktur 38 umrahmt. Beim Ausführungsbeispiel ist dies so gelöst, dass die Haltenutstruktur 52 eine zur Längsachse 7 konzentrische ringförmige Aufnahmenut 52a hat, die zur Ventilkammer 7 hin axial offen ist und in die die beim Ausführungsbeispiel ringförmige Aufpralldämpfungsstruktur 38 eingesetzt ist. Die Aufpralldämpfungsstruktur 38 hat derartige axiale Abmessungen, dass sie axial aus der Aufnahmenut 52a herausragt, wobei der von der Aufprallfläche 56 umrahmte Abschnitt des Abschlussdeckels 28 das Anschlagmittel 54 bildet.

Dadurch, dass das Anschlagmittel 54 eine bezüglich der Deckeldichtung 36 separate Komponente ist, bei der es sich insbesondere um einen unmittelbaren Bestandteil des Abschlussdeckels 28 handelt, kann die Funktion der definitiven Vorgabe der Hubendlage unabhängig von der Aufpralldämpfungsstruktur 38 bewirkt werden.

Die montierte Deckeldichtung 36 liegt mit ihrer Dichtungsstruktur 37 zwischen der inneren Deckelstirnfläche 34 und der ihr zugewandten ersten oder zweiten Gehäusestirnfläche 33a, 33b des Gehäusekörpers 32. Da der Abschlussdeckel 28 durch die Befestigungsmittel 35 mit dem Gehäusekörper 32 axial verspannt ist, wird folglich die Dichtungsstruktur 37 zwischen den vorgenannten Flächen eingespannt und ruft einen zuverlässigen Dichtkontakt mit beiden sich gegenüberliegenden Flächen 34; 33a, 33b hervor. Die Aufpralldämpfungsstruktur 38 steht im Querschnittsbereich der Ventilkammer 7 mit der inneren Deckelstirnfläche 34 in Kontakt und kann sich folglich mit ihrer dem Ventilschieber 3 entgegengesetzten Rückseite an dieser inneren Deckelstirnfläche 34 abstützen. Trifft der Ventilschieber 3 auf die Aufprallfläche 56 der Aufpralldämpfungsstruktur 38 auf, wird Letztere zwischen dem Ventilschieber 3 und dem Abschlussdeckel 28 ein Stückweit zusammengedrückt und nimmt auf diese Weise einen Anteil der Bewegungsenergie des Ventilschiebers 3 auf, der mithin wirksam auf kurzer Strecke abgebremst wird.

Die vorzugsweise vorhandenen Haltearme 42 übernehmen zweckmäßigerweise nur eine Haltefunktion zur Integration der Aufpralldämpfungsstruktur 38 in die Deckeldichtung 36 und dabei zur Lagefixierung der Aufpralldämpfungsstruktur 38 bezüglich der Dichtungsstruktur 37. Die Aufpralldämpfungsstruktur 38 steht weiter in Richtung zum Ventilschieber 3 vor als die Haltearme 42, sodass Letztere an der Aufpralldämpfung nicht teilhaben. Es besteht allerdings durchaus die Möglichkeit, die Haltearme 42 so auszubilden, dass sie auch zur Aufpralldämpfung des Ventilschiebers 3 beitragen und insbesondere auch zu der Aufpralldämpfungsstruktur 38 gehören.

## Patentansprüche

1. Mehrwegeventil, mit einem Ventilgehäuse (2), das eine Ventilkammer (7) definiert, in der ein unter Ausführung einer Hubbewegung (4) axial bewegbarer Ventilschieber (3) aufgenommen ist, und mit Antriebsmitteln zur gesteuerten Fluidbeaufschlagung des Ventilschiebers (3) zwecks Hervorrufens der Hubbewegung (4), wobei die Ventilkammer (7) an wenigstens einer Stirnseite durch einen Abschlussdeckel (28) des Ventilgehäuses (2) begrenzt ist, der unter Zwischenschaltung einer die Ventilkammer (7) zur Umgebung hin abdichtenden Deckeldichtung (36) axial an einen die Ventilkammer (7) peripher umschließenden Gehäusekörper (32) angesetzt ist, wobei die Deckeldichtung (36) eine axial zwischen dem Abschlussdeckel (28) und dem Gehäusekörper (32) angeordnete Dichtungsstruktur (37) aufweist und wobei in der Ventilkammer (7) eine axial zwischen dem Ventilschieber (3) und dem Abschlussdeckel (28) wirkende nachgiebige Aufpralldämpfungsstruktur (38) angeordnet ist, die ein im Hubweg des Ventilschiebers (3) angeordneter integraler Bestandteil der Deckeldichtung (36) ist, **dadurch gekennzeichnet, dass** die Aufpralldämpfungsstruktur (38) mit radialem Abstand zu der Dichtungsstruktur (37) angeordnet und mittels mindestens eines Haltearmes (42) an der Dichtungsstruktur (36) befestigt ist.

2. Mehrwegeventil nach Anspruch 1, **dadurch gekennzeichnet, dass** die Dichtungsstruktur (37) die Aufpralldämpfungsstruktur (38) umrahmt.

3. Mehrwegeventil nach Anspruch 1 oder 2, **dadurch gekennzeichnet, dass** sich der mindestens eine Haltearm (42) radial bezüglich der Längsachse (8) der Ventilkammer (7) erstreckt.

4. Mehrwegeventil nach einem der Ansprüche 1 bis 3, **dadurch gekennzeichnet, dass** die Aufpralldämpfungsstruktur (38) mittels mehrerer in der Umfangsrichtung der Ventilkammer (7) zueinander beabstandeter Haltearme (42) an der sie umschließenden Dichtungsstruktur (37) befestigt ist, wobei zweckmäßigerweise mindestens ein zwischen zwei Haltearmen (42) angeordneter Zwischenraum der Deckeldichtung (36) eine Strömungsöffnung (44) bildet, die einen im Abschlussdeckel (28) ausgebildeten Fluidkanal (22b, 22c) mit der Ventilkammer (7) verbindet.

5. Mehrwegeventil nach einem der Ansprüche 1 bis 4, **dadurch gekennzeichnet, dass** die Aufpralldämpfungsstruktur (38) koaxial zur Ventilkammer (7) angeordnet ist.

6. Mehrwegeventil nach einem der Ansprüche 1 bis 5, **dadurch gekennzeichnet, dass** die Aufpralldämpfungsstruktur (38) ringförmig ausgebildet ist.

7. Mehrwegeventil nach einem der Ansprüche 1 bis 6, **dadurch gekennzeichnet, dass** die Dichtungsstruktur (37) einen die Ventilkammer (7) umrahmenden ringförmigen Kammerdichtungsabschnitt (45) und mindestens einen damit verbundenen, mindestens eine radial beabstandet zur Ventilkammer (7) am Abschlussdeckel (28) angeordnete Kanalmündung umrahmenden Kanaldichtungsabschnitt (45, 47) aufweist.

8. Mehrwegeventil nach einem der Ansprüche 1 bis 7, **dadurch gekennzeichnet, dass** die Deckeldichtung (36) maskenförmig strukturiert ist.

9. Mehrwegeventil nach einem der Ansprüche 1 bis 8, **dadurch gekennzeichnet, dass** die Deckeldichtung (36) einstückig ausgebildet ist und/oder durchweg aus dem gleichen Material besteht und/oder aus einem Material mit gummielastischen Eigenschaften besteht.

10. Mehrwegeventil nach einem der Ansprüche 1 bis 9, **dadurch gekennzeichnet, dass** die Deckeldichtung (36) ein bezüglich des Ventilgehäuses (2) separates Bauteil ist, das zweckmäßigerweise in eine Haltenutstruktur (52) eingelegt ist, die in dem Abschlussdeckel (28) an deren dem Gehäusekörper (32) zugewandter Deckelstirnfläche (34) ausgebildet ist.

11. Mehrwegeventil nach einem der Ansprüche 1 bis 10, **dadurch gekennzeichnet, dass** der Abschlussdeckel (28) an seiner der Ventilkammer (7) zugewandten Deckelstirnfläche (34) mindestens ein einen Festanschlag zur Vorgabe einer Hubendlage des Ventilschiebers (3) bildendes Anschlagmittel (54) aufweist, bezüglich dessen die Aufpralldämpfungsstruktur (38) in Richtung zur Ventilkammer (7) axial vorsteht und die zweckmäßigerweise ein einstückiger Bestandteil des Abschlussdeckels (28) ist.

12. Mehrwegeventil nach einem der Ansprüche 1 bis 11, **dadurch gekennzeichnet, dass** das Anschlagmittel (54) von der Aufpralldämpfungsstruktur (38) umrahmt ist, zweckmäßigerweise in einer konzentrischen Anordnung.

13. Mehrwegeventil nach einem der Ansprüche 1 bis 12, **dadurch gekennzeichnet, dass** der Ventilschieber (3) radial außen von einer bezüglich des Ventilgehäuses (2) ortsfesten äußeren Ventilsitzstruktur (24) umschlossen ist, die mehrere mit axialem Abstand zueinander angeordnete und radial nach innen weisende ringförmige äußere Ventilsitzflächen (24a) aufweist, mit denen eine am radialen Außenumfang des Ventilschiebers (3) angeordnete und die Hubbewegung (4) mitmachende innere Ventilsitzstruktur (25) radial dichtend zusammenwirken kann, um die Fluidverbindung zwischen mehreren in die Ventilkammer (7) einmündenden Ventilkanälen (22) zu steuern.

14. Mehrwegeventil nach einem der Ansprüche 1 bis 13, **dadurch gekennzeichnet, dass** die Antriebsmittel als eine elektro-fluidische Vorsteuerventileinrichtung (5) ausgebildet sind.

15. Mehrwegeventil nach Anspruch 14, **dadurch gekennzeichnet, dass** der Abschlussdeckel (28) ein Bestandteil der elektrofluidischen Vorsteuerventileinrichtung (5) ist und zweckmäßigerweise einen ein elektrisch betätigbares Vorsteuerventil (5a, 5b) der Vorsteuerventileinrichtung (5) tragenden Sockel (53) bildet.

## Claims

1. Multiway valve, comprising a valve housing (2) defining a valve chamber (7) in which a valve spool (3) which is axially movable while performing a stroking movement (4) is accommodated, and further comprising drive means for the controlled application of fluid to the valve spool (3) in order to generate the stroking movement (4), wherein the valve chamber (7) is at at least one end face bounded by an end cover (28) of the valve housing (2), which end cover (28) is axially fitted to a housing body (32) peripherally enclosing the valve chamber (7) with the interposition of a cover seal (36) sealing the valve chamber (7) against the environment, wherein the cover seal (36) has a seal structure (37) located axially between the end cover (28) and the housing body (32), and wherein a yielding impact damping structure (38), which acts axially between the valve spool (3) and the end cover (28) and which is an integral part of the cover seal (36) located in the stroke path of the valve spool (3), is located in the valve chamber (7), **characterised in that** the impact damping structure (38) is arranged at a radial distance from the seal structure (37) and secured to the seal structure (37) by means of at least one holding arm (42).

2. Multiway valve according to claim 1, **characterised in that** the seal structure (37) frames the impact damping structure (38).

3. Multiway valve according to claim 1 or 2, **characterised in that** the at least one holding arm (42) extends radially relative to the longitudinal axis (8) of the valve chamber (7).

4. Multiway valve according to any of claims 1 to 3, **characterised in that** the impact damping structure (38) is secured to the enclosing seal structure (37) by means of a plurality of holding arms (42) spaced in the circumferential direction of the valve chamber (7), wherein at least one gap of the cover seal (36) between two holding arms (42) expediently forms a flow opening (44), which connects a fluid passage (22b, 22c). formed in the end cover (28) to the valve chamber (7).

5. Multiway valve according to any of claims 1 to 4, **characterised in that** the impact damping structure (38) is arranged to be coaxial with the valve chamber (7).

6. Multiway valve according to any of claims 1 to 5, **characterised in that** the impact damping structure (38) is annular in design.

7. Multiway valve according to any of claims 1 to 6, **characterised in that** the seal structure (37) comprises an annular chamber seal section (45), which frames the valve chamber (7), and at least one chamber seal section (45, 47), which is connected thereto and frames at least one passage orifice located on the end cover (28) at a radial distance from the valve chamber (7).

8. Multiway valve according to any of claims 1 to 7, **characterised in that** the cover seal (36) has a mask structure.

9. Multiway valve according to any of claims 1 to 8, **characterised in that** the cover seal (36) is designed as a single piece and/or consists of the same material throughout and/or consists of a material with rubber-elastic properties.

10. Multiway valve according to any of claims 1 to 9, **characterised in that** the cover seal (36) is a component which is separate from the valve housing (2) and which is expediently installed into a retaining groove structure (52) formed in the end cover (28) at the cover end face (34) which faces the housing body (32).

11. Multiway valve according to any of claims 1 to 10, **characterised in that** the end cover (28) has at the cover end face (34) which faces the valve chamber (7) at least one stop means (54) forming a fixed stop for presetting an end-of-stroke position of the valve spool (3), relative to which stop means (54) the impact damping structure (38) axially projects towards the valve chamber (7), and which stop means (54) expediently is an integral part of the end cover (28).

12. Multiway valve according to any of claims 1 to 11, **characterised in that** the stop means (54) is framed by the impact damping structure (38), expediently in a concentric arrangement.

13. Multiway valve according to any of claims 1 to 12, **characterised in that** the valve spool (3) is radially enclosed on the outside by a valve seat structure (24), which is stationary relative to the valve housing (2) and which comprises a plurality of outer valve seat faces (24a), which are arranged at an axial distance from one another and extend radially inwards, and with which an inner valve seat structure (25) located at the radial outer circumference of the valve spool (3) and participating in the stroking movement (4) can cooperate in a radially sealing manner in order to control the fluid connection between a plurality of valve passages (22) terminating into the valve chamber (7).

14. Multiway valve according to any of claims 1 to 13, **characterised in that** the drive means are designed as an electro-fluidic pilot valve device (5).

15. Multiway valve according to claim 14, **characterised in that** the end cover (28) is a part of the electro-fluidic pilot valve device (5) and expediently forms a base (53) supporting an electrically actuable pilot valve (5a, 5b) of the pilot valve device (5).

## Revendications

1. Soupape à plusieurs voies, comprenant un boîtier de soupape (2), qui définit une chambre de soupape (7), dans laquelle un coulisseau de soupape (3) pouvant être déplacé de manière axiale en exécutant un déplacement ascendant (4) est logé, et comprenant des moyens d'entraînement pour soumettre de manière commandée le coulisseau de soupape (3) à l'action d'un fluide afin de provoquer le déplacement ascendant (4), dans laquelle la chambre de soupape (7) est délimitée au niveau au moins d'un côté frontal par un couvercle de fermeture (28) du boîtier de soupape (2), lequel est placé de manière axiale au niveau d'un corps de boîtier (32) renfermant de manière périphérique la chambre de soupape (7) en intercalant un joint d'étanchéité de couvercle (36) étanchéifiant la chambre de soupape (7) par rapport à l'extérieur, dans laquelle le joint d'étanchéité de couvercle (36) présente une structure d'étanchéité (37) disposée de manière axiale entre le couvercle de fermeture (28) et le corps de boîtier (32) et dans laquelle une structure d'amortissement de chocs (38) flexible agissant de manière axiale entre le coulisseau de soupape (3) et le couvercle de fermeture (28) est disposée dans la chambre de soupape (7), laquelle est un élément constitutif faisant partie intégrante du joint d'étanchéité de couvercle (36), disposé dans le trajet ascendant du coulisseau de soupape (3), **caractérisée en ce que** la structure d'amortissement de chocs (38) est disposée à une distance radiale par rapport à la structure d'étanchéité (37) et est fixée au niveau de la structure d'étanchéité (36) au moyen au moins d'un bras de retenue (42).

2. Soupape à plusieurs voies selon la revendication 1, **caractérisée en ce que** la structure d'étanchéité (37) encadre la structure d'amortissement de chocs (38).

3. Soupape à plusieurs voies selon la revendication 1 ou 2, **caractérisée en ce que** l'au moins un bras de maintien (42) s'étend de manière radiale par rapport à l'axe longitudinal (8) de la chambre de soupape (7).

4. Soupape à plusieurs voies selon l'une quelconque des revendications 1 à 3, **caractérisée en ce que** la structure d'amortissement de chocs (38) est fixée, au moyen de plusieurs bras de maintien (42), espacés les uns des autres dans la direction circonférentielle de la chambre de soupape (7), au niveau de la structure d'étanchéité (37) renfermant les bras de maintien, dans laquelle de manière appropriée au moins un espace intermédiaire, disposé entre deux bras de maintien (42), du joint d'étanchéité de couvercle (36) forme une ouverture d'écoulement (44), qui relie un canal de fluide (22b, 22c) réalisé dans le couvercle de fermeture (28) à la chambre de soupape (7).

5. Soupape à plusieurs voies selon l'une quelconque des revendications 1 à 4, **caractérisée en ce que** la structure d'amortissement de chocs (38) est disposée de manière coaxiale par rapport à la chambre de soupape (7).

6. Soupape à plusieurs voies selon l'une quelconque des revendications 1 à 5, **caractérisée en ce que** la structure d'amortissement de chocs (38) est réalisée de manière à présenter une forme annulaire.

7. Soupape à plusieurs voies selon l'une quelconque des revendications 1 à 6, **caractérisée en ce que** la structure d'étanchéité (37) présente une section d'étanchéité de chambre (45) présentant une forme annulaire encadrant la chambre de soupape (7) et au moins une section d'étanchéité de canal (45, 47) reliée à la première, encadrant au moins une embouchure de canal disposée de manière radialement espacée par rapport à la chambre de soupape (7) au niveau du couvercle de fermeture (28).

8. Soupape à plusieurs voies selon l'une quelconque des revendications 1 à 7, **caractérisée en ce que** le joint d'étanchéité de couvercle (36) est structuré de manière à présenter une forme de masque.

9. Soupape à plusieurs voies selon l'une quelconque des revendications 1 à 8, **caractérisée en ce que** le joint d'étanchéité de couvercle (36) est réalisé d'un seul tenant et/ou est constitué en grande partie du même matériau et/ou est constitué d'un matériau présentant des propriétés élastiques.

10. Soupape à plusieurs voies selon l'une quelconque des revendications 1 à 9, **caractérisée en ce que** le joint d'étanchéité de couvercle (36) est un élément séparé par rapport au boîtier de soupape (2), lequel est inséré de manière appropriée dans une structure de rainure de maintien (52), qui est réalisée dans le couvercle de fermeture (28) au niveau de sa surface frontale de couvercle (34) tournée vers le corps de boîtier (32).

11. Soupape à plusieurs voies selon l'une quelconque des revendications 1 à 10, **caractérisé en ce que** le couvercle de fermeture (28) présente, au niveau de sa surface frontale de couvercle (34) tournée vers la chambre de soupape (7), au moins un moyen de butée (54) formant une butée fixe pour spécifier une position finale ascendante du coulisseau de soupape (3), par rapport à laquelle la structure d'amortissement de chocs (38) fait saillie de manière axiale en direction de la chambre de soupape (7) et qui est de manière appropriée un élément constitutif d'un seul tenant du couvercle de fermeture (28).

12. Soupape à plusieurs voies selon l'une quelconque des revendications 1 à 11, **caractérisée en ce que** le moyen de butée (54) est encadré par la structure d'amortissement de chocs (38), de manière appropriée selon un agencement concentrique.

13. Soupape à plusieurs voies selon l'une quelconque des revendications 1 à 12, **caractérisée en ce que** le coulisseau de soupape (3) est entouré radialement à l'extérieur d'une structure de siège de soupape (24) extérieure stationnaire par rapport au boîtier de soupape (2), laquelle présente plusieurs surfaces de sièges de soupape (24a) extérieures présentant une forme annulaire disposées à une distance axiale les unes des autres et pointant radialement vers l'intérieur, avec lesquelles une structure de siège de soupape (25) intérieure, disposée au niveau de la circonférence extérieure du coulisseau de soupape (3) et accompagnant le déplacement ascendant (4), peut coopérer en assurant l'étanchéité de manière radiale afin de commander la liaison fluidique entre plusieurs canaux de soupape (22) débouchant dans la chambre de soupape (7).

14. Soupape à plusieurs voies selon l'une quelconque des revendications 1 à 13, **caractérisée en ce que** les moyens d'entraînement sont réalisés sous la forme d'un dispositif de soupape pilote (5) électro-fluidique.

15. Soupape à plusieurs voies selon la revendication 14, **caractérisée en ce que** le couvercle de fermeture (28) est un élément constitutif du dispositif de soupape pilote (5) électro-fluidique et forme de manière appropriée un socle (5) supportant une soupape pilote (5a, 5b) pouvant être actionnée électriquement du dispositif de soupape pilote (5).
